# EUROPÄISCHE PATENTSCHRIFT

(11) **EP 1 169 105 B1**
(45) Veröffentlichungstag und Bekanntmachung des Hinweises auf die Patenterteilung: **13.08.2003**
(21) Anmeldenummer: 00903598.1
(22) Anmeldetag: 21.01.2000
(51) Int. Cl.: B01D 35/147, B01D 35/027, F15B 21/04

(54) **FILTERVORRICHTUNG, INSBESONDERE SAUGRÜCKLAUFFILTER**
FILTERING DEVICE, ESPECIALLY A SUCTION RETURN FILTER
DISPOSITIF FILTRANT, NOTAMMENT FILTRE DE RETOUR SOUS ASPIRATION

(30) Priorität: 15.04.1999 DE 19917031
(43) Veröffentlichungstag der Anmeldung: 09.01.2002
(73) Patentinhaber: Hydac Filtertechnik GmbH, 66280 Sulzbach/Saar (DE)
(72) Erfinder: WILKENDORF, Werner, D-66564 Ottweiler (DE); WEGMANN, Holger, Erich, D-66386 St. Ingbert (DE)
(74) Vertreter: Bartels, Martin Erich Arthur
(86) Internationale Anmeldenummer: EP0000440
(87) Internationale Veröffentlichungsnummer: WO00062898

(56) Entgegenhaltungen:
- WO-A-99/37907
- DE-A- 3 313 297
- DE-A- 4 206 420
- DE-A- 19 515 962

## Beschreibung

Die Erfindung betrifft eine Filtervorrichtung in Form eines Saugrücklauffilters, mit einem Filtergehäuse, das zwei Nutzanschlüsse und einen Tankanschluß aufweist und das der Aufnahme mindestens eines Filterelementes dient, sowie mit drei Rückschlagventilen versehen ist, von denen zwei federbelastet in der Schließstellung gehalten sind.

Bei den bekannten Filtervorrichtungen dieser Art, wie sie auf dem Markt frei erhältlich sind, sind die angesprochenen Rückschlagventile an verschiedenen Orten am Filtergehäuse angebracht und nehmen mithin dort viel Bauraum ein. Des weiteren erhöht dies den konstruktiven Aufwand für die Filtervorrichtung und mithin die Kosten. Die bekannten Lösungen sind derart aufgebaut, daß direkt filtriertes Fluid dem an einem Nutzanschluß angeschlossenen Verbraucher zugeführt werden kann. Die bekannten Saugrücklauffilter sind zum direkten Einsatz am Tankanschluß für einen Ölbehälter vorgesehen, wobei das Filtergehäuse und die angesprochenen Nutz- und Tankanschlüsse derart ausgelegt sind, daß Druckspitzen ohne Schäden aufgenommen werden können. Über eines der Rückschlagventile ist sichergestellt, daß bei einer Druckspitze im Tankanschluß und mithin im Tank- oder Ölbehälter die dahingehende Spitze in Richtung zumindest einer der Nutzanschlüsse abgebaut werden kann.

Durch die DE 195 16 657 A1 ist eine Filtervorrichtung bekannt für einen einfach wirkenden Teleskop-Hydraulikzylinder zum Heben und Senken einer Ladefläche, einer Ladepritsche od.dgl. bei Lastkraftwagen. In einer Bypassleitung zu dem Filterelement ist ein federbelastetes Rückschlagventil angeordnet sowie hinter dem Bypassabzweig und dem Filterelement ein weiteres. Diese zu einer Baugruppe zusammengefaßten, federbelasteten Rückschlagventile ermöglichen ein Ausfahren des Hydraulikzylinders mit ungefiltertem Fluid über den Bypass und beim Absenken bzw. Einfahren des Hydraulikzylinders wird das Fluid in Richtung eines Sammelbehälters durch das Filterelement gefiltert, wobei das Rückschlagventil in der Bypassleitung geschlossen ist. Ein weiteres, nicht federbelastetes Rückschlagventil zwischen einer Hydropumpe und einer Ventilanordnung zur Ansteuerung des Filterelementes dient dem Überlastschutz der Hydropumpe bei einem ungewollten Zurückströmen des Fluids. Bei einer weiteren Ausführungsform der bekannten Lösung wird diese Anordnung vergleichbar mit einem federbelasteten Rückschlagventil im Bypass und zwei federlastfreien Rückschlagventilen, einmal in einer weiteren Bypassleitung und einmal im direkten Zufluß zum Filterelement, erreicht. Die angesprochenen Rückschlagventile nehmen innerhalb der Filtervorrichtung als eigenständige Bauteile gleichfalls viel Bauraum ein und bei Funktionsstörungen ist ein Austausch der Rückschlagventile nur schwer möglich.

Durch die DE-A-195 15 962 ist eine Filtervorrichtung in Form eines Saugrücklauffilters bekannt, mit einem Filtergehäuse, das zwei Nutzanschlüsse und einen Tankanschluß aufweist und das der Aufnahme mindestens eines Filterelementes dient, wobei die bekannte Filtervorrichtung mit drei Rückschlagventilen versehen ist, von denen zwei federbelastet in der Schließstellung gehalten sind und wobei das dritte Rückschlagventil federlastfrei als Nachsaugventil mit kugelförmigem Ventilkörper ausgebildet, integraler Bestandteil eines der federbelasteten Rückschlagventile in Form eines Druckbegrenzungsventiles ist und eine zu diesem entgegengesetzte Öffnungsrichtung aufweist. Die genannten drei Rückschlagventile stellen eine hydraulische Notversorgung für den jeweiligen Verbraucher her und sind dabei an zwei verschiedenen Stellen voneinander getrennt Teil der Filtervorrichtung, so daß die bekannte Lösung gleichfalls konstruktiv groß aufbaut und da bei der bekannten Lösung die Rückschlagventile (zwei zu einer Funktionsgruppe gefaßt) an verschiedenen Stellen hydraulisch an- und aufzusteuern sind, sind Funktionsstörungen im Betrieb der bekannten Vorrichtungen nicht auszuschließen.

Durch die DE-A-33 13 297 ist darüber hinaus ein Flüssigkeitsfilter für umkehrbare Druck- oder Strömungsrichtungen bekannt. Diese bekannte Lösung setzt Rückschlagventile mit federbeaufschlagten Ventiltellern in der Art einer Graetz-Schaltung ein, wobei die Rückschlagventile und die Verbindungen zwischen ihnen als Bohrungen ausgebildet in einem Ventilblock aufgenommen sind. Die Fertigung eines solchen Flüssigkeitsfilters ist daher wesentlich vereinfacht und die Wege zwischen den Rückschlagventilen sind aufgrund ihrer zusammengefaßten Anordnung verkürzt und kann so gestaltet werden, daß ein möglichst geringer Durchflußwiderstand entsteht. Mit dem bekannten Flüssigkeitsfilter lassen sich die Aufgabenstellungen für einen üblichen Saugrücklauffilter gemäß den vorstehend beschriebenen bekannten Lösungen aber nicht realisieren.

Ausgehend von diesem Stand der Technik liegt der Erfindung die Aufgabe zugrunde, einen verbesserten Saugrücklauffilter zur Verfügung zu stellen, der konstruktiv und mithin kostengünstig aufgebaut und dennoch funktionssicher im Betrieb ist. Eine dahingehende Aufgabe löst eine Filtervorrichtung in Form eines Saugrücklaufventils mit den Merkmalen des Patentanspruches 1 in seiner Gesamtheit.

Bei der erfindungsgemäßen Lösung gemäß dem Inhalt des Patentanspruches 1 sind alle Rückschlagventile als Baugruppe zusammengefaßt an einem Ende des Filtergehäuses angeordnet, wobei das eine Rückschlagventil federlastfrei als integraler Bestandteil eines der federbelasteten Rückschlagventile eine zu diesem entgegengesetzte Öffnungsrichtung aufweist. Darüber hinaus ist dieses federlastfreie Rückschlagventil in Parallelanordnung zum einen federbelasteten Rückschlagventil angeordnet, wobei zwischen diesen beiden Rückschlagventilen und dem weiteren federbelasteten Rückschlagventil das eine Filterelement angeordnet ist, wobei die Rückschlagventile alle an den Tankanschluß angeschlossen sind, und wobei die federbelasteten Rückschlagventile in Richtung des Tankanschlusses in ihre geöffnete Stellung bewegbar sind. Hierdurch ist eine kompakte Anordnung der Rückschlagventileinheit möglich, die an zentraler Stelle konstruktiv einfach an das Filtergehäuse anschließbar ist. Dies erleichtert auch den Austausch der angesprochenen Baugruppe gegen eine andere, sofern es zu einem unerwarteten Versagen zumindest eines der Rückschlagventile kommen sollte.

Ist das Filterelement durch übermäßige Verschmutzung zugesetzt, kann mit der erfindungsgemäßen Lösung der bei einem der beiden Nutzanschlüsse ansteigende Druck in unschädlicher Weise über das federmäßig - auch verstärkt dimensioniert - ausgelegte eine Rückschlagventil in den Tank abgeführt werden und die übrigen Rückschlagventile bleiben in einem dahingehenden Fall in ihrer geschlossenen Position. Kommt es zu Druckspitzen am anderen Nutzanschluß in gegenläufiger Richtung kann das andere federbelastete Rückschlagventil zum Tank hin öffnen. Kommt es hingegen zu Druckspitzen am Tankanschluß selbst, verbleibt das federbelastete Rückschlagventil, das mit dem federlastfreien Rückschlagventil zusammenwirkt, in seiner geschlossenen Position, wohingegen das andere federbelastete Rückschlagventil zum anderen Nutzanschluß hin öffnet. Die dahingehende Funktion wird auch erfüllt, sofern die Durchströmungsrichtung an den Nutzanschlüssen umgekehrt wird.

Weitere vorteilhafte Ausgestaltung der erfindungsgemäßen Filtervorrichtung sind Gegenstand der Unteransprüche.

Im folgenden wird ein Ausführungsbeispiel der beanspruchten Filtervorrichtung anhand der Zeichnung näher erläutert.

Es zeigen in prinzipieller und nicht maßstäblicher Darstellung die
- Fig.1: einen Längsschnitt durch die Filtervorrichtung,
- Fig.1a: eine vergrößerte Darstellung der Baugruppe mit den drei Rückschlagventilen gem. der Fig.1,
- Fig.2: in Blickrichtung eines mit X bezeichneten Pfeiles das Kopfende der Filtervorrichtung nach der Fig. 1,
- Fig.3: einen Hydraulikschaltplan der Filtervorrichtung nach den Fig.1 und 2.

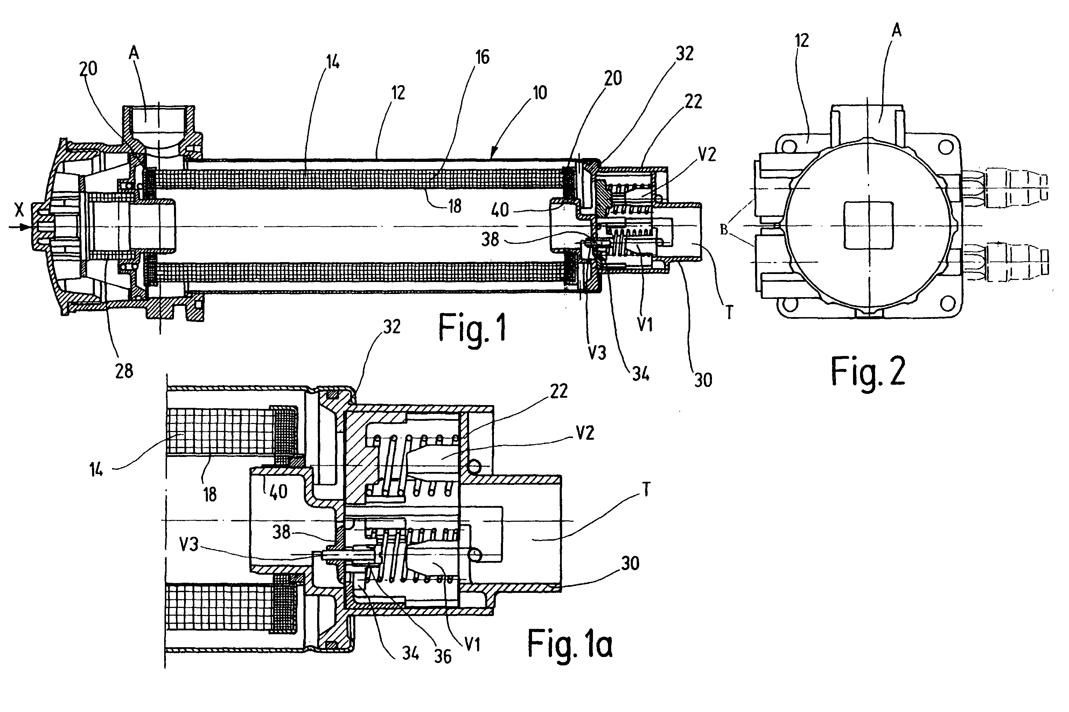

Die Filtervorrichtung nach den Figuren betrifft einen sog. Saugrücklauffilter 10 mit einem Filtergehäuse 12, das zwei Nutzanschlüsse A, B und einen Tankanschluß T aufweist. Wie die Fig.1 und 2 zeigen, ist der Tankanschluß T an dem einen Ende des Filtergehäuses 12 angeordnet und die Nutzanschlüsse A, B auf der gegenüberliegenden anderen Seite, wobei die Nutzanschlüsse B gegenüber dem Nutzanschluß A in Längsrichtung gesehen um einen radialen Winkel von 90° versetzt angeordnet sein können. Das Filtergehäuse 12 dient der Aufnahme mindestens eines Filterelementes 14, dessen Filtermatte 16 sich gegen ein auf der Innenseite des Filterelementes 14 angeordnetes Stützrohr 18 abstützt. Ferner ist das Filterelement 14 an seinen freien Enden in Endkappen 20 geführt, die die Verbindung des Filterelementes 14 mit dem Filtergehäuse 12 in dichtender Weise herstellen.

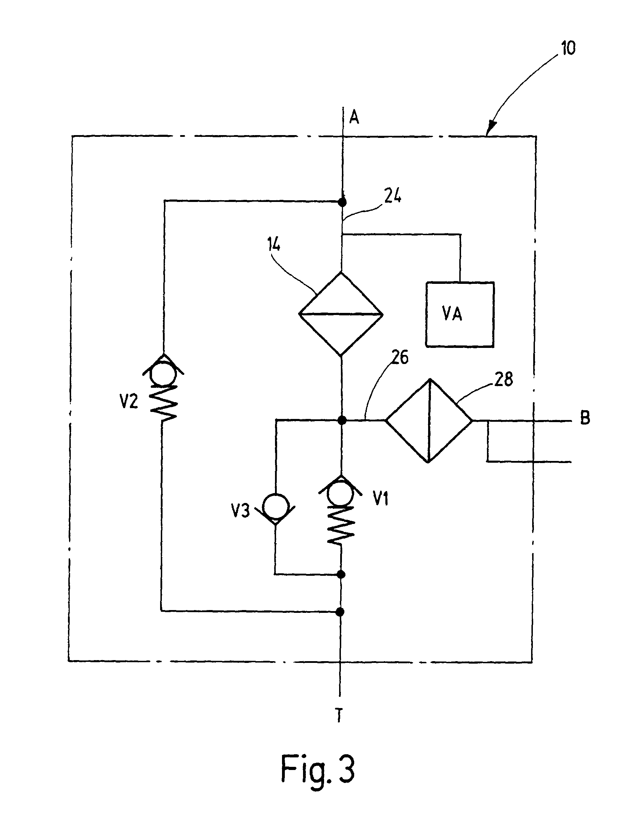

Der Saugrücklauffilter 10 weist des weiteren drei Rückschlagventile V1, V2 und V3 auf, von denen die Rückschlagventile V1 und V2 federbelastet sind. Das dritte Rückschlagventil V₃ ist, wie dies insbesondere die Fig.1 und 3 zeigen, federlastfrei ausgelegt. Wie insbesondere die Fig.1 zeigt, sind alle angesprochenen Rückschlagventile V1, V2 und V3 als Baugruppe 22 zusammengefaßt und am freien, dem Kopfstück des Filtergehäuses 12 gegenüberliegenden Ende an diesem angeordnet. Ferner ist das federlastfreie Rückschlagventil V3 als integraler Bestandteil des federbelasteten Rückschlagventils V1 ausgeführt mit einer zu diesem entgegengesetzten Öffnungsrichtung.

Die Rückschlagventile V1, V2 und V3 sind allesamt an den Tankanschluß T fluidführend angeschlossen, wobei die federbelasteten Rückschlagventile V1 und V2 in Richtung des Tankanschlusses T in ihre geöffnete Stellung bewegbar sind (vgl. hierzu auch Fig.3). Wie des weiteren die Fig.3 zeigt, sind die Rückschlagventile V1, V2 und V3 in Parallelanordnung zueinander zwischen dem Tankanschluß T und den Nutzanschlüssen A, B geschaltet. Des weiteren ist in die Verbindungsleitung 24 zwischen den beiden federbelasteten Rückschlagventilen V1, V2 das Filterelement 14 geschaltet, wobei in einer weiteren Verbindungsleitung 26, die in die angesprochene erste Verbindungsleitung 24 zwischen den beiden federbelasteten Rückschlagventilen V1, V2 mündet und die zu dem Nutzanschluß B führt, ein weiteres Filterelement 28 vorzugsweise in Form eines Schutzsiebes angeordnet ist. Bei Normalbetrieb der Filtervorrichtung stellt der Nutzanschluß A den fluidführenden Eingang dar, wobei dann das Filterelement 14 von außen nach innen durchströmt wird und derart die Hauptfiltration für das Fluid übernimmt und wobei dann nach Durchströmen des derart gereinigten Fluids von innen nach außen über das weitere als Schutzsieb ausgebildete Filterelement 28 das Fluid über den Nutzanschluß B abgeführt wird. Die angesprochenen Nutzanschlüsse A, B können mehrfach ausgelegt sein, insbesondere kann der Ausgang B aus zwei Nutzanschlüssen gebildet sein, wie dies die Fig.2 wiedergibt.

Wie insbesondere die Fig.1 zeigt, bildet die Baugruppe 22 mit den Rückschlagventilen V1, V2 und V3 ein Gehäuseteil 30 aus, das über eine Bördelung 32 mit dem eigentlichen Filtergehäuse 12 verbindbar ist, wobei die dahingehende Umfassung mittels einer Bördelung 32 über entsprechende Dichteinrichtungen, wie Dichtringe, fluiddicht ausgeführt ist. Die Federkraft des federbelasteten Rückschlagventils V1 mit dem federlastfreien Rückschlagventil V3 ist geringer als die Federkraft des anderen federbelasteten Rückschlagventils V2, so daß das Rückschlagventil V1 druckgesteuert und bei intakten filtrierenden Filterelementen 24, 28 auf jeden Fall vor dem federbelasteten Rückschlagventil V2 öffnet. Das federlastfreie Rückschlagventil V3 im Schließteil 34 des zugeordneten federbelasteten Rückschlagventils V1 ist über eine Längsführung 36 geführt und über den Fluiddruck entsprechend in Öffnungsrichtung aufsteuerbar.

Als Längsführung 36 ist ein Schraubenbolzen vorgesehen, der mit der Schließplatte 38 des Rückschlagventils V3 fest verbunden ist und längsverfahrbar eine Mittenöffnung im Schließteil 34 des Rückschlagventils V1 durchgreift. Das Schließteil 34 des Rückschlagventils V1 ist gleichfalls plattenartig ausgebildet und stützt sich in seiner gezeigten Schließstellung an entsprechenden Innenwänden des Gehäuseteils 30 ab. Hierbei drückt die zugeordnete Druckfeder des Rückschlagventils V1 das Schließteil 34 in Blickrichtung auf die Figuren gesehen vom Tankanschluß T weg in die linke Endstellung. Die Schließplatte 38 des federlastfreien Rückschlagventils V3 stützt sich in ihrer in den Figuren dargestellten Schließstellung zum einen an dem Schließteil 34 ab sowie an den angesprochenen, zugeordneten Gehäusewänden des Gehäuseteils 30.

Nimmt der Druck im Tankanschluß T zu, beispielsweise weil es zu einer Druckspitze od.dgl. im Tank kommt, öffnet das Ventil V3 entgegen dem Fluiddruck im Inneren des Filterelementes 14 und gibt somit den Weg frei zwischen dem Tankanschluß T und dem Nutzanschluß B. Ist der Druck im Inneren des Filterelementes 14 höher als am Tankanschluß T, was die Regel ist, verbleibt das Ventil V3 in seiner geschlossenen Position, wobei bei einem vorgebbaren Schwellenwert in Abhängigkeit von der Schließkraft des federbelasteten Rückschlagventils V1 die Ventilkombination V1 und V3 öffnet, wenn der Innendruck im Filterelement 14 größer ist als die Federkraft des Ventils V1 in Verbindung mit dem anstehenden Druck am Tankanschluß T, der üblicherweise normalen Umgebungsbedingungen entspricht. Schließteil 34 und Schließplatte 38 verfahren dann in einem dahingehenden Fall in Blickrichtung auf die Fig.1 und 1a gesehen beide nach rechts, sofern sich die Schließplatte 38 nicht an feststehenden Wandstücken des Gehäuseteils 30 abstützen sollte. Ist aber eine solche Abstützung vorgesehen, wie in den Figuren dargestellt, verbleibt die Schließplatte 38 in ihrer geschlossenen Anlageposition mit dem Gehäuseteil 30 und es ist eine Fluidverbindung zwischen dem Schließteil 34 und dem Innenraum des Filterelementes 14 vorzusehen, damit unter dem Innendruck das Schließteil 34 allein in eine öffnende Stellung in Blickrichtung auf die Figuren gesehen nach rechts bewegt werden kann.

Das Gehäuseteil 30 greift mit einem fluiddurchlässigen Flanschstück 40 in das eine Ende des Filterelementes 14 ein und bildet derart eine Lagefixierung für das eine Ende des Filterelementes 14 aus.

Zur Verbesserung des Verständnisses wird die erfindungsgemäße Filtervorrichtung nunmehr anhand ihrer prinzipiellen Funktion nach der Fig.3 näher erläutert. Das über den Eingang A eintretende verschmutzte Fluid wird über das Filterelement 14 feinstfiltriert und über das Grobschutzsieb 28 an den Nutzanschluß B weitergeleitet. Die dahingehende Anordnung kann für den Antrieb von Baumaschinen, hydrostatischen Antrieben od.dgl. eingesetzt werden. Eine Verschmutzungsanzeige VA überwacht den Verschmutzungszustand des Filterelementes 14. Ist das Filterelement 14 beispielsweise durch übermäßige Verschmutzung zugesetzt, kann der bei dem Nutzanschiuß A ansteigende Druck in unschädlicher Weise über das federmäßig verstärkt dimensioniert ausgelegte Rückschlagventil V2 in den Tank abgeführt werden. Die Rückschlagventile V1, V3 bleiben in einem dahingehenden Fall in ihrer geschlossenen Position. Kommt es zu Druckspitzen am Nutzanschluß B in gegenläufiger Richtung, also zum Nutzanschluß A hin, kann das federbelastete Rückschlagventil V1 zum Tank hin öffnen. Kommt es zu Druckspitzen am Tankanschluß T, verbleiben die Rückschlagventile V1 und V2 in ihrer geschlossenen Position, wohingegen V3 zum Nutzanschluß B hin öffnet. Dabei wird vom Tankanschluß T in die Vorrichtung einströmendes, gegebenenfalls verschmutztes Fluid über das weitere Filterelement 28 zumindest grob abgereinigt. Ferner läßt sich die Durchströmungsrichtung von A nach B umkehren, also von B nach A, sofern das Filterelement 14 hierfür konstruktiv ausgelegt ist, beispielsweise indem es mit einem Außenstützrohr versehen wurde.

Die Baugruppe mit Rückschlagventilen V1, V2 und V3 gemäß der Fig.3 stellt eine kompakte vielseitig einsetzbare Funktionseinheit dar, die im Versagensfall leicht gegen eine neue Baugruppe austauschbar ist. Die kompakte Funktionseinheit baut konstruktiv einfach auf und läßt sich fertigungstechnisch mit geringen Mitteln realisieren.

## Patentansprüche

1. Filtervorrichtung in Form eines Saugrücklauffilters (10), mit einem Filtergehäuse (12), das zwei Nutzanschlüsse (A,B) und einen Tankanschluß (T) aufweist und das der Aufnahme mindestens eines Filterelementes (28) dient, sowie mit drei Rückschlagventilen (V1, V2, V3) versehen ist, von denen zwei (V1, V2) federbelastet in der Schließstellung gehalten sind, wobei alle Rückschlagventile (V1, V2, V3) als Baugruppe (22) zusammengefaßt an einem Ende des Filtergehäuses (12) angeordnet sind, wobei das Rückschlagventil (V3) federlastfrei als integraler Bestandteil eines der federbelasteten Rückschlagventile (V1) eine zu diesem entgegengesetzte Öffnungsrichtung aufweist, wobei das federlastfreie Rückschlagventil (V3) in Parallelanordnung zum federbelasteten Rückschlagventil (V1) angeordnet ist, wobei in eine Verbindungsleitung (24) zwischen den beiden federbelasteten Rückschlagventilen (V1, V2) das eine Filterelement (14) angeordnet ist, wobei die Rückschlagventile (V1, V2, V3) alle an den Tankanschluß (T) angeschlossen sind, und wobei die federbelasteten Rückschlagventile (V1, V2) in Richtung des Tankanschlusses (T) in ihre geöffnete Stellung bewegbar sind.

2. Filtervorrichtung nach Anspruch 1, **dadurch gekennzeichnet, daß** in eine weitere Verbindungsleitung (26), die in die Verbindungsleitung (24) zwischen den beiden federbelasteten Rückschlagventilen (V1, V2) mündet und die zu einem der Nutzanschlüsse (B) führt, ein weiteres Filterelement (28), vorzugsweise in Form eines Schutzsiebes, angeordnet ist.

3. Filtervorrichtung nach Anspruch 1 oder 2, **dadurch gekennzeichnet, daß** die Baugruppe (22) mit den Rückschlagventilen (V1, V2, V3) ein Gehäuseteil (30) bildet, das über eine Bördelung (32) mit dem Filtergehäuse (12) verbindbar ist.

4. Filtervorrichtung nach einem der Ansprüche 1 bis 3, **dadurch gekennzeichnet, daß** die Federkraft des federbelasteten Rückschlagventils (V1) mit dem federlastfreien Rückschlagventil (V3) geringer ist als die Federkraft des anderen, federbelasteten Rückschlagventils (V2).

5. Filtervorrichtung nach einem der Ansprüche 1 bis 4, **dadurch gekennzeichnet, daß** das federlastfreie Rückschlagventil (V3) im Schließteil (34) des zugeordneten federbelasteten Rückschlagventils (V1) über eine Längsführung (36) geführt und über den Fluiddruck ansteuerbar ist.

6. Filtervorrichtung nach einem der Ansprüche 3 bis 5, **dadurch gekennzeichnet, daß** das Gehäuseteil (30) mit einem fluiddurchlässigen Flanschstück (40) in das eine Filterelement (14) eingreift und eine Lagefixierung für dieses Filterelement (14) ausbildet.

7. Filtervorrichtung nach einem der Ansprüche 4 bis 6, **dadurch gekennzeichnet, daß** die beiden Filterelemente (14,28) in Reihenschaltung zwischen den beiden Nutzanschlüssen (A,B) angeordnet sind.

## Claims

1. A filter device in the form of a section return filter (10) with a filter housing (12) which has two operating connections (A, B) and a tank connection (T), and which accommodates at least one filter element (28) and is provided with three non-return valves, two of which (V1, V2) are held in the closed position under spring load, all non-return valves (V1, V2, V3) being grouped as an assembly (22) arranged at one end of the filter housing (12), whereby the non-return valve (V3) is not spring-loaded and is an integral part of one of the spring-loaded non-return valves (V1) and opens in the direction opposite to it, whereby the non-spring-loaded non-return valve (V3) is arranged parallel to the spring-loaded non-return valve (V1), whereby the one filter element (14) is arranged in a connecting line (24) between the two spring-loaded non-return valves (V1, V2), whereby all the non-return valves (V1, V2, V3) are connected to the tank connection (T) and whereby the spring-loaded non-return valves (V1, V2) are movable into their open position in the direction of the tank connection (T).

2. A filter device according to Claim 1, **characterised in that** a further filter element (28), preferably in the form of a protective mesh, is arranged in a further connecting line (26) which terminates in the connecting line (24) between the two spring-loaded non-return valves (V1, V2) and leads to one of the operating connections (B).

3. A filter device according to Claim 1 or 2, **characterised in that** the assembly (22) with the non-return valves (V1, V2, V3) forms a housing part (30) which can be connected to the filter housing (12) by flanging (32).

4. A filter device according to one of the Claims 1 to 3, **characterised in that** the spring force of the spring-loaded non-return valve (V1) with the non-return valve (V3) which is not spring-loaded is lower than the spring force of the other spring-loaded non-return valve (V2).

5. A filter device according to one of the Claims 1 to 4, **characterised in that** the non-spring-loaded non-return valve (V3) is guided over a longitudinal guide (36) in the closing part (34) of the associated spring-loaded non-return valve (V1) and can be controlled by the fluid pressure.

6. A filter device according to one of the Claims 3 to 5, **characterised in that** the housing part (30) engages with the flange (40) which is permeable to fluid into the filter element (14) and forms a locating attachment for this filter element (14).

7. A filter device according to one of the Claims 4 to 6, **characterised in that** the two filter elements (14, 28) are arranged in series between the two operating connections (A, B).

## Revendications

1. Dispositif de filtrage sous forme d'un filtre de retour d'aspiration (10), avec un carter de filtre (12) qui comporte deux raccords d'utilités (A,B) et un raccord de réservoir (T) et qui sert à loger au moins un élément filtrant (28), et qui est pourvu de trois clapets anti-retour (V1, V2, V3) dont deux (V1, V2) sont maintenus dans la position de fermeture par ressort, tous les clapets anti-retour (V1, V2, V3) étant montés regroupés sous forme de module (22) à une extrémité du carter de filtre (12), le clapet anti-retour non commandé par ressort (V3) présentant, comme partie intégrante de l'un des clapets anti-retour (V1) commandés par ressort, une direction d'ouverture opposée à celui-ci, le clapet anti-retour non commandé par ressort (V3) étant disposé parallèlement au clapet anti-retour commandé par ressort(V1), l'élément filtrant (14) étant disposé dans une conduite de raccordement (24) entre les deux clapets anti-retour commandés par ressort(V1, V2), les clapets anti-retour (V1, V2, V3) étant tous raccordés au raccord de réservoir (T) et les clapets anti-retour commandés par ressort(V1, V2) étant déplaçables, dans leur position ouverte, dans la direction du raccord de réservoir (T).

2. Dispositif de filtrage selon la revendication 1, **caractérisé en ce qu'**un autre élément filtrant (28), de préférence sous forme d'un tamis de protection, est disposé dans une autre conduite de raccordement (26) qui débouche dans la conduite de raccordement (24) entre les deux clapets anti-retour commandés par ressort(V1, V2) et qui conduit à l'un des raccords d'utilités (B).

3. Dispositif de filtrage selon la revendication 1 ou 2, **caractérisé en ce que** le module avec les clapets anti-retour (V1, V2, V3) forme une partie de carter (30) qui peut être raccordée au carter de filtre (12) par l'intermédiaire d'un bord rabattu (32).

4. Dispositif de filtrage selon l'une quelconque des revendications 1 à 3, **caractérisé en ce que** la force de ressort du clapet anti-retour commandé par ressort (V1) avec le clapet anti-retour non commandé par ressort (V3) est plus faible que la force de ressort de l'autre clapet anti-retour commandé par ressort (V2).

5. Dispositif de filtrage selon l'une quelconque des revendications 1 à 4, **caractérisé en ce que** le clapet anti-retour non commandé par ressort (V3) est guidé dans la partie de fermeture (34) du clapet anti-retour commandé par ressort (V1) associé par l'intermédiaire d'une glissière longitudinale (36) et peut être commandé par la pression du fluide.

6. Dispositif de filtrage selon l'une quelconque des revendications 3 à 5, **caractérisé en ce que** la partie de carter (30) avec une bride (40) perméable aux liquides est en prise avec l'élément filtrant (14) et constitue une fixation en position pour cet élément de filtre (14).

7. Dispositif de filtrage selon l'une quelconque des revendications 4 à 6, **caractérisé en ce que** les deux éléments filtrants (14, 28) sont montés en série entre les deux raccords d'utilités (A,B).
